# EUROPEAN PATENT APPLICATION

(11) **EP 1 589 400 A2**
(43) Date of publication of application: **26.10.2005**
(21) Application number: 05005592.0
(22) Date of filing: 15.03.2005
(51) Int. Cl.: G06F 1/16, H01Q 1/22

(54) **Portable computer system with antenna**

(30) Priority: 16.04.2004 US 826046
(71) Applicant: Hewlett-Packard Development Company, L.P., Houston, TX 77070 (US)
(72) Inventor: Homer, Steven S., Tomball, TX 77377 (US)
(74) Representative: Schoppe, Fritz

(57) **Abstract**

A portable computer system (10) comprises a bezel (56) adapted to support a screen member (14). The portable computer system (10) also comprises an antenna (20) disposed at least partially between the bezel (56) and the screen member (14).

## Description

### BACKGROUND

Portable computer systems such as laptop or notebook computers, tablet personal computers, personal digital assistants, and other types of portable computing devices, generally comprise an antenna for enabling wireless communications. For example, one type of portable device antenna comprises conductive traces formed on a printed circuit board and conductively coupled via a cable or otherwise to a peripfieral component interface (PCI) card, bus or other type of electronic device within the computer system. However, antenna placement in the portable computer system is generally constrained by limited space availability within the device and/or interference with other electronic components of the device.

### SUMMARY OF THE INVENTION

In accordance with one embodiment of the present invention, a portable computer system comprises a bezel adapted to support a screen member. The portable computer system also comprises an antenna disposed at least partially between the bezel and the screen member.

In accordance with another embodiment of the present invention, a method of manufacturing a portable computer system comprises providing a screen member having an antenna disposed on an interior surface thereof. The method also comprises providing a bezel adapted to support the screen member where at least a portion of the antenna is disposed between the bezel and the screen member.

In accordance with yet another embodiment of the present invention, portable computer system comprises a screen member and a display device disposed adjacent an interior surface of the screen member. The portable computer system also comprises an antenna disposed on the interior surface of the screen member.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a portable computer system in accordance with the present invention; and

FIGURE 2 is a cross-sectional diagram illustrating the portable computer system illustrated in FIGURE 1 taken along the line 2-2 of FIGURE 1.

### DETAILED DESCRIPTION OF THE DRAWINGS

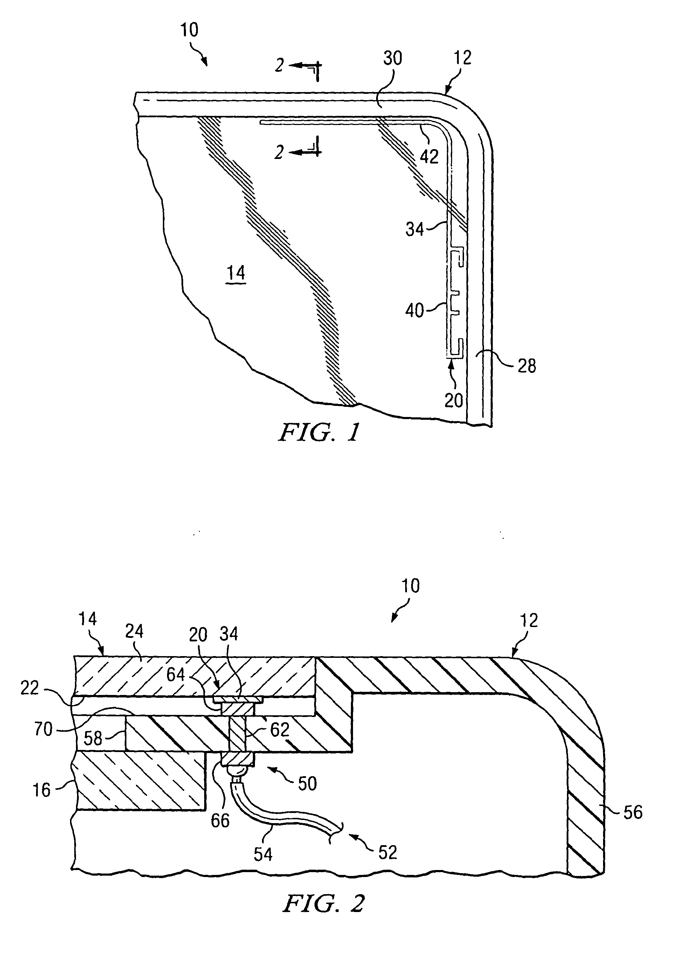

The preferred embodiments of the present invention and the advantages thereof are best understood by referring to FIGURES 1 and 2 of the drawings, like numerals being used for like and corresponding parts of the various drawings.

FIGURE 1 is a diagram illustrating an embodiment of a portable computer system 10 in accordance with the present invention, and FIGURE 2 is a cross-sectional diagram of system 10 taken along the line 2-2 of FIGURE 1. In the embodiment illustrated in FIGURES 1 and 2, system 10 comprises a portable computer device 12 having a transparent screen member 14 disposed over a display device 16. Portable computer device 12 may comprise a laptop or notebook computer, personal digital assistant, tablet personal computer (PC), or any other type of portable computer device. Display device 16 may comprise a liquid crystal display (LCD) or any other type of device for visually displaying information to a user of device 12. Screen member 14 may comprise a digitizer interface, touch screen, writing surface, protective glass cover, or other type of transparent,member disposed over display device 16.

In the embodiment illustrated in FIGURES 1 and 2, system 10 comprises an antenna 20 to enable wireless communications for device 12. In the embodiment illustrated in FIGURES 1 and 2, antenna 20 comprises a conductive material disposed on an interior surface 22 of screen member 14. For example, referring to FIGURE 1, system 10 is illustrated from a perspective looking toward an exterior surface 24 of screen member 14 having antenna 20 extending along a side area 28 of device 12 to a side area 30 of device 12. Antenna 20 comprises a conductive material applied to or otherwise deposited on interior surface 22 of screen member 14. For example, antenna 20 may comprise a conductive trace deposited, etched, or otherwise formed on interior surface 22 of screen member 14, a metal or conductive film applied to interior surface 22 of screen member 14, or another type of conductive material disposed or attached to interior surface 22 of screen member 14 to provide wireless communication capability for device 12. In the embodiment illustrated in FIGURE 1, antenna 20 extends along two side areas of device 12. However, it should be understood that antenna 20 may extend along a greater or fewer quantity of side areas of device 12. Further, in the embodiment illustrated in FIGURE 1, antenna 20 comprises a single conductive trace 34. However, it should be understood that additional antennas 20 and/or additional conductive traces 34 for each antenna 20 may be formed on device 12.

In the embodiment illustrated in FIGURE 1, antenna 20 comprises a pattern portion 40 and an extension portion 42 extending from pattern portion 40. In some embodiments, pattern portion 40 is configured having a desired pattern or arrangement of conductive material to enable a particular wireless characteristic for antenna 20. Additionally, in some embodiments, antenna 20 is configured having a desired or predetermined length formed by extension portion 42 and/or pattern portion 40 to facilitate a desired antenna characteristic and/or to facilitate connection of antenna 20 to an internal component of device 12. For example, to accommodate a desired antenna characteristic for device 12, pattern portion 40 may be disposed along a particular location of side area 28 or any other area of screen member 14. However, to facilitate a connection of antenna 20 to an internal component of device 12, extension portion 42 may be formed to extend to any desired location of screen member 14 corresponding to an internal location of such internal component In the embodiment illustrated in FIGURE 1, extension portion 42 extends along a plurality of sides of device 12 (e.g., side areas 28 and 30). However, it should be understood that extension portion 42 may extend along a greater or fewer quantity of sides of device 12. Further, it should be understood that extension portion 42 may be configured to extend along a portion of a particular side of device 12 or along an entire length of a particular side of device 12. Additionally, in FIGURE 1, pattern portion 40 is illustrated as being disposed along a single side of device 12 (e.g., side area 28). However, it should be understood that pattern portion 40 may extend to a plurality of sides of device 12. Further, antenna 20 may also be configured having multiple pattern portions 40 and/or extension portions 42.

Referring to FIGURE 2, system 10 also comprises a screen member connector 50 for conductively coupling antenna 20 to an internal antenna circuit 52. For example, in some embodiments, internal antenna circuit 52 comprises an electrical cable 54 extending or otherwise electrically coupled to a peripheral component interface (PCI) card or other type of electronic assembly or circuit disposed within device 12. However, it should be understood that device 12 may be configured having other types of internal antenna circuitry and/or devices. In the embodiment illustrated in FIGURE 2, a bezel 56 is configured to support screen member 14 and/or display device 16 and conductively couple antenna 20 to internal antenna circuit 52. For example, as illustrated in FIGURE 2, display device 16 is disposed adjacent interior surface 22 of screen member 14 having a bezel flange 58 extending between screen member 14 and display device 16. Bezel flange 58 comprises an electrically conductive via 62 disposed therein. In the embodiment illustrated in FIGURE 2, connector 50 comprises a conductive pad or strap 64 disposed between via 62 of bezel 56 and trace 34 of antenna 20 to provide a conductive path from antenna 20 to via 62. Further, a conductive pad or strap 66 is disposed on an interior surface 68 of bezel flange 58 to provide a conductive path from via 62 to internal antenna circuit 52. However, it should be understood that connector 50 may be otherwise configured to provide a conductive path for antenna 20 from screen member 14 to internal antenna circuit 52. In the embodiment illustrated in FIGURES 1 and 2, antenna 20 is preferably disposed entirely between interior surface 22 of screen member 14 and an exterior surface 70 of bezel flange 58 to avoid visually impeding display device 16. However, it should be understood that all or a portion of antenna 20 may extend outside flange 58 of bezel 56 to accommodate a desired antenna 20 characteristic. For example, antenna 20 may be configured having extended portion 42 and/or pattern portion 40 extending beyond flange 58 to facilitate a desired antenna characteristic.

Thus, as illustrated in FIGURES 1 and 2, antenna 20 is disposed on interior surface 22 of screen member 14, thereby decreasing or substantially eliminating the amount of space required within device 12 accorded conventional antenna equipment. For example, in some embodiments, as illustrated in FIGURES 1 and 2, antenna 20 extends along side areas of device 12 for a predetermined or desired distance and conductively connects to internal antenna circuit 52 devices at a desired location. Thus, embodiments of the present invention utilize less space within device 12. Additionally, embodiments of the present invention substantially reduce or eliminate interference generally caused by having an antenna disposed within device 12 and/or too close to other electronic components. Further, embodiments of the present invention enable greater flexibility of material selection for bezel 56. For example, because antenna 20 is disposed on interior surface 22 of screen member 14 generally above bezel 56 instead of below bezel 56, interference caused by a material used to form bezel 56 is substantially reduced or eliminated. Therefore, embodiments of the present invention provide greater material and design flexibility.

## Claims

1. A portable computer system (10), comprising:
a bezel (56) adapted to support a screen member (14); and
an antenna (20) disposed at least partially between the bezel (56) and the screen member (14).

2. The system (10) of Claim 1, wherein the antenna (20) comprises a conductive trace deposited on an interior surface (22) of the screen member (14).

3. The system (10) of Claim 1, further comprising a display device (16) disposed adjacent an interior surface (22) of the screen member (14).

4. The system (10) of Claim 1, wherein the antenna (20) extends a predetermined distance along an interior surface (22) of the screen member (14).

5. The system (10) of Claim 1, wherein the antenna (20) comprises a pattern portion (40).

6. The system (10) of Claim 5, wherein the antenna (20) comprises an extension portion (42) extending from the pattern portion (40) to a screen member connector (50).

7. The system (10) of Claim 1, wherein the antenna (20) comprises an extension portion (42) extending to at least two side areas (28,30) of the screen member (14).

8. The system (10) of Claim 1, further comprising a screen member connector (50) adapted to conductively couple the antenna (20) to an internal antenna circuit (52) of the portable computer system (10).

9. The system (10) of Claim 1, wherein the bezel (56) is adapted to conductively couple the antenna (20) to an internal antenna circuit (52) of the portable computer system (10).

10. The system (10) of Claim 1, wherein the bezel (56) comprises a conductive via (62) conductively coupling the antenna (20) to an internal antenna circuit (52) of the portable computer system (10).
